Europäisches Patentamt

European Patent Office

Office européen des brevets

(11) Publication number: **0 420 615 A2**

(12) # EUROPEAN PATENT APPLICATION

(21) Application number: 90310538.5

(51) Int. Cl.⁵: **C08L 51/06, C08L 101/00**

(22) Date of filing: 26.09.90

(30) Priority: **27.09.89 US 413029**

(43) Date of publication of application:
**03.04.91 Bulletin 91/14**

(84) Designated Contracting States:
**AT BE CH DE DK ES FR GB GR IT LI LU NL SE**

(71) Applicant: **ROHM AND HAAS COMPANY**
**Independence Mall West**
**Philadelphia Pennsylvania 19105(US)**

(72) Inventor: **Bortnick, Newman**
**509 Oreland Mill Road**
**Oreland, PA 19073(US)**
Inventor: **Work, William James**
**1288 Burnett Road**
**Huntingdon Valley, PA 19006(US)**
Inventor: **Ilenda, Casmir Stanislaus**
**36 Sima Road**
**Holland, PA 18966(US)**

(74) Representative: **Angell, David Whilton et al**
**ROHM AND HAAS (UK) LTD. European**
**Operations Patent Department Lennig House**
**2 Mason's Avenue**
**Croydon CR9 3NB(GB)**

(54) **Graft copolymer impact modifier.**

(57) A polymer composition, having enhanced impact resistance, comprises polar polymer and graft copolymer impact modifier which comprises copolymer trunk derived from ethylene/propylene and optionally non-conjugated monomer with a predominantly methyacrylate ester side chain of number average molecular weight of 9,800 to 100,000 grafted with a covalent bond thereon.

EP 0 420 615 A2

# GRAFT COPOLYMER IMPACT MODIFIER

This invention is concerned with polymer compositions containing graft copolymeric impact modifier and polar polymer.

Polymers derived from monomers of ethylene/propylene and a non-conjugated diene as well as copolymers derived from ethylene/propylene monomer are known as impact modifiers for certain polar polymers. For example, EP-A-0,033,220, describes polymers useful as impact modifiers for poly(vinyl chloride). The impact modifier polymers are described as including ethylene/propylene copolymers on which is grafted, for example, methyl methacrylate, and ethylene/propylene/diene terpolymers which also have methyl methacrylate grafted thereon. The publication teaches the usefulness of the graft polymer which comprises ethylene/propylene/diene terpolymer upon which MMA has been grafted as an impact modifier for poly(vinyl chloride). The publication acknowledges CA-1,003,145 and states that the aforesaid graft terpolymers and graft copolymer are useful as an impact modifier for styrene-methylstyrene, styrene-methacrylic acid, styrene-methyl methacrylate and styrene-acrylonitrile.

This publication neither recognized nor considered, the role of the molecular weight of the grafted portion of the ethylene/propylene diene derived polymer (hereinafter "EPDM") grafted with MMA.

US-A-4,251,645 discloses a thermoplastic molding composition which includes a vinyl chloride homopolymer or copolymer and a graft polymer of styrene and for methyl methacrylate or styrene and acrylonitrile; all in the presence of an ethylene/propylene/diene monomer as a graft base. The patent states that the method of producing the graft polymers on "EPDM", their structure and the monomers grafted determine their effectiveness as high impact modifiers. The patent however fails to teach or suggest that molecular weight of the graft portion is a critical factor in producing an efficacious EPDM copolymer grafted with a methacrylate. US-A-4,251,645 patent also teaches that the monomers which may be grafted onto the "EPDM rubbers" include methyl methacrylate and mixtures thereof.

US-A-4,493,921 teaches a composition which is a blend of a polycarbonate and polybutylene terephthalate and a graft copolymer of EPDM and methyl methacrylate. This patent fails to recognize that molecular weight of the graft portion of the copolymer is a critical factor in impact resistance efficacy.

EP-A-0,230,609 is directed to an impact resistant polymer resin composition. The polymer resin composition comprises an aromatic carbonate resin and a graft derivative of an ethylene propylene/diene terpolymer and at least one polymer which may be a polyolefin and olefin-acrylate or methacrylate copolymer or a selectively hydrogenated linear, sequential or radial teleblock copolymer of a vinyl aromatic compound and an olefin elastomer. The publication teaches that the formulation of blends which contain three or more different resins is fraught with a high degree of complexity and unpredictability and fails to teach or recognize that molecular weight of the graft portion may be a critical factor determining the efficacy of a grafted EPDM copolymer as an impact modifier for polar polymers.

WO 88/07065 teaches an impact composition which is a EPDM/glycidyl methacrylate copolymer, polycarbonate and polybutylene terephthalate. This publication fails to teach the composition to which the present invention is directed and further fails to teach the importance of the molecular weight of the graft portion of the EPDM graft copolymer in enhancing impact resistance.

US-A-4,166,081 teaches an EPDM graft copolymer (with methyl methacrylate) as an impact modifier for styrene-acrylonitrile resins.

This invention is concerned with the enhancement of impact resistance of polar polymers.

We have now surprisingly found that by using certain selected graft copolymeric impact modifiers, wherein the grafted portion has a molecular weight within certain defined limits, the impact resistance of a polar polymer in compositions therewith, is enhanced to an unexpected degree.

This invention provides a polymer composition comprising, by weight based on the two specified components, from about 35 percent to about 95 percent of a polar polymer and from about 65 percent to about 5 percent of impact modifier for said polymer, said impact modifier comprising graft copolymer having trunk and graft portions, said trunk comprising units of (1) ethylene, propylene and non-conjugated diene or (2) ethylene and propylene, and said graft portion comprising at least one methacrylate chain grafted with a covalent bond to said trunk and having a weight ratio with said trunk of from about 1:9 to about 4:1, said chain comprising at least 70 percent by weight of units of methacrylic ester of the formula $CH_2 = C(CH_3)COOR$, where R is aikyl, aryl, substituted alkyl, substituted aryl, or substituted alkaryl and optionally up to about 30 percent by weight of units of acrylic or styrenic monomer, said graft portion having a number average molecular weight of from about 9,800 to about 100,000.

This invention also provides a process for enhancing the impact resistance of polar polymer comprising blending therewith adding to form the above defined graft polymer in the appropriate amount and to the use of the polymer compositions for the production of impact resistant articles.

The trunk of the graft copolymer which is the impact modifier in this invention, comprises EPDM which we mean to include rubber terpolymers of ethylene, propylene and, optionally, non-conjugated diene monomer such as 1,4-hexadiene, ethylidenenorbornene, dicyclopentadiene and other bridged cyclic dienes, 1,5 cyclooctadiene and other cyclic dienes and the like.

The ratio of ethylene to propylene to non-conjugated diene may vary widely. For example, the amount of ethylene may vary from about 35 to about 70 weight percent, the amount of propylene may vary from about 65 to about 30 weight percent and the amount of non-conjugated diene monomer may vary from about 0 to about 15 weight percent all based on the total weight of the EPDM. All parts given herein are parts by weight.

It is preferred however that the weight ratio of ethylene to propylene to non-conjugated diene monomer be about 40 to 65% ethylene; about 60% to 35% of propylene; and 0% to about 10% of diene.

When no diene is present, then the ratio of ethylene units to propylene units should preferably be from about 35:65 to about 70:30 and preferably from about 40:60 to about 65:35.

The preferred monomer for the graft portion of the graft copolymer is methyl methacrylate. As much as 100% of this, or of other 2 to 4 carbon alkyl methacrylates, can be used. Up to 50% of high alkyl, such as dodecyl and the like, aryl, such as phenyl and the like, alkaryl, such as benzyl and the like, and/or cycloalkyl, such as cyclohexyl and the like, methacrylates can be used. In addition, up to 20% (preferably less than 10%) of the following monomers can be incorporated with the methacrylate esters which form the major portion of the monomer: methacrylic acid, methacrylamide, hydroxyethyl methacrylate, hydroxypropyl methacrylate, alkoxyalkyl methacrylates, such as ethoxyethyl methacrylate and the like, alkylthioalkyl methacrylates, such as ethylthioethyl methacrylate and the like, methacrylamide, t-butylaminoethyl methacrylate, dimethylaminoethyl methacrylate, dimethylaminopropyl methacrylamide , glycidyl methacrylate, methacryloxypropyltriethoxysilane, acrylate monomers (such as ethyl acrylate, butyl acrylate and the like), styrene, acrylonitrile, acrylamide, acrylic acid, acryloxypropionic acid, vinyl pyridine, and N-vinylpyrrolidone. In addition, as much as 10% of maleic anhydride or itaconic acid may be used. It is important that the relative rate of chain transfer of the polymerizing chains to its own polymer be minimal relative to transfer to the polyolefin chains if efficient high yield production of homogenous, non-gelled graft polymer is to be obtained.

The process of polymerizing the graft monomer in the presence of the trunk polymer leads to the production of both ungrafted and grafted material. The amount of grafted material may be in the range of 5% to 50% of the total polymer or copolymer produced. The graft copolymer may be prepared in a process that polymerizes the monomer in the presence of the trunk copolymer The process is conducted in a solvent which swells or dissolves the trunk polymer. The solvent is also one that has no or low chain transfer ability towards the polymerizing chains. Examples include non-branched and branched aliphatic hydrocarbons, chlorobenzene, benzene, t-butylbenzene, anisole, cyclohexane, naphthas, and dibutyl ether. Preferably, the solvent is easy to remove by extrusion devolatization, and therefore has a boiling point below 200° C, preferably below about 150° C. To avoid excessive pressure, a boiling point above about 100° C is also preferred.

The molecular weight of the graft portion of said copolymer must be within the number average molecular weight range of from about 9,800 to about 100,000.

If the molecular weight is less than about 9,800, then the impact resistance which the graft copolymer imparts to the polar polymer will be less than is possible. If the molecular weight exceeds about 100,000, then melt blending the graft copolymer impact modifier with the polar polymer becomes difficult and performance may be lost.

The molecular weight of the graft portion may be determined based on the accepted expectation that the molecular weight of the extractible non-grafted acrylic polymer will be equal to that of the grafted portion of the graft copolymer. Therefore, the non-grafted acrylic polymer is first extracted with a suitable solvent, such as acetone. Next, the solvent is removed and the soluble fraction is dried to constant weight under mild conditions. A known weight of the soluble fraction is redissolved in tetrahydrofuran and subjected to gel permeation chromatography using tetrahydrofuran as a carrier solvent. Molecular weight parameters are then determined relative to a series of standard polymethacrylates, each having a narrow molecular weight distribution.

It is preferred however that the number average molecular weight of the graft portion of the copolymer be from about 15,000 to about 70,000 because an acrylic segment is obtained which is sufficiently long for good entanglement interaction with the polar polymer, and the acrylic section is also sufficently short to obtain good mobility at process temperatures in that it enables the final graft copolymer to be readily blended with a polar polymer.

Generally the molecular weight of the graft portion of the copolymer may be controlled within the desired range by selection of the initiator, control of the initiator concentration by adjusting the initiator feed rate to yield a constant radical flux and control of the polymerization temperature between about 110°C to about 200°C.

The graft copolymer may be prepared by polymerizing the graft portion of the polymer in the presence of the polymerized trunk polymer.

The temperature during polymerization may vary from about 110°C to about 200°C but preferably is kept between 130°C to about 175°C and more preferably between 145°C to 160°C. Pressure utilized during the polymerization may be atmospheric to superatmospheric or as high as 2100 kPa or such pressure as is necessary to keep the reaction mixture in the liquid phase at the polymerization temperature. The unreacted monomer concentration should be kept low during the reaction. This is controlled by balancing the radical flux and the monomer feed conditions.

For polymerization, oil-soluble thermal free-radical initiators are used. Those that work in this process are those with a one hour half life at about 60° to about 200°C. The preferred ones have a one hour half life in the range 90° to 170°C. Suitable free radical initiators include peroxy initiators such as t-butyl peroxypivalate, lauroyl peroxide, 1,1,3,3-tetramethylbutyl peroxy-2-ethyl hexanoate, 2,5-dimethyl-2,5-bis(2-ethylhexanoylperoxy)hexane, acetyl peroxide, succinic acid peroxide, t-butyl peroctoate, benzyl peroxide, t-butyl peroxyisobutyrate, t-butyl peroxyimaleic acid, 1-hydroxy-1-hydroperoxydicyclohexyl peroxide, 1,1-bis-(t-butylperoxy)3,3,5-trimethylcyclohexane, t-butyl peroxycrotonate, 2,2-bis(t-butylperoxybutane), t-butylperoxy isopropyl carbonate, 2,5-dimethyl-2,5-bis(benzoylperoxy)hexane, t-butyl peracetate, methyl ethyl ketone peroxide, di-t-butyl diperoxyphthalate, t-butyl perbenzoate, dicumyl peroxide, 2,5,dimethyl-2,5-di(t-butylperoxy) hexane, 2,4-pentanedione peroxide, di-t-butyl peroxide, 2,5-dimethyl-2,5-di(t-butylperoxy)-hexyne-3, 1,1,3,3-tetramethylbutyl hydroperoxide, cumene hydroperoxide, 2,5-dimethyl-2,5-di(hydroperoxy)-hexane, t-butyl hydroperoxide, t-butyl cumyl peroxide, p-menthane hydroperoxide and azo-bis-isobutyronitrile.

The initiator is introduced together with the monomer during the polymerization in a manner so as to maintain a fairly constant radical flux during most of the polymerization. This is done to achieve the desired high molecular weight, a high graft efficiency, the desired molecular weight distribution, and freedom from gel.

Radical flux can be defined as the calculated rate of formation of free radicals, expressed in equivalent of radicals per liter per minute. While not now being capable of being measured experimentally, it may be estimated by calculation from the known rate of decomposition of the free radical initiator present at any time, and its instantaneous concentration. Decomposition rates for initiators are determined from published literature, and the concentration is either a known constant, as in continuous feed of initiator, or can be calculated (for a single charge of initiator) from the known decomposition rate constant and the time elapsed since feed.

Good results are achieved when a uniform radical flux is maintained and the radical flux is calculated to be in the range 0.00001 to 0.0005 equivalents of radicals per liter per minute. The preferred range is 0.00002 to 0.0002 equivalents of radicals per liter per minute. The radical flux is dependent on the specific initiator utilized, its concentration and rate of decomposition, and the reaction temperature chosen. The rate of decomposition can be found in tabulated data, such as in "The Polymer Handbook", 2nd Edition, ed. Brandrup and Immergut, Wiley and Sons, New York (1975), or provided by the manufacturer. Even if the exact rate constant at the temperature of interest is not known, often activation energies are supplied from which the rate can be calculated. The radical flux is:

Radical flux $\simeq 2(k_d)(60)(I)$

where is that rate constant for decomposition of the particular initiator in units of inverse seconds at the temperature of the reaction, and I the concentration of the initiator in mol/liter. In a batch reaction, I steadily decreases from $I_0$, the initial charge, and the radical flux is not constant. When initiator is continuously fed, a calculation must be made to determine the instantaneous concentration of initiator, but the value is much more constant than in a batch reaction, especially with careful control of initiator feed.

The process may be run in a semi-continuous or continuous manner. Monomer, solvent, and initiator may be added by means similar to those described above. Polymer may be separately dissolved in solvent and added at a rate essentially equivalent to that of product removal, or polymer may be added as a solid to an extruder where it is melted and fed to the reaction by means of extruder as a viscous liquid.

After the polymerization, the reaction mixture may be held at its final temperature and pressure. Then the mixture is devolatized to remove solvent and any unreacted monomer. Acceptable devolatilizing devices include a devolatilizing extruder, a rotary film evaporator, or any other convenient stripping device as known in the art. The polymerization reaction mixture may be conveyed to the devolatilization apparatus as a batch or continuously.

The degree of grafting of the graft copolymer is also important. The degree of grafting is defined as the fraction of the polymer reaction product which is graft copolymer. Preferably this degree of grafting should be from about 0.05 to about 0.50, more preferably from about 0.10 to about 0.30.

If the degree of grafting is less than about 0.05, then the resultant graft copolymer will not be sufficiently compatible with the selected polar polymer. If the degree of grafting exceeds 0.50 then the molecular weight of the graft portion of the copolymer may be excessive and the benefits of this invention may not be obtained. Additionally, if the degree of grafting exeeds 0.50 and even if the molecular weight of the graft portion is within the acceptable range, the resultant graft copolymer may suffer from loss of the desirable rubbery properties. Furthermore, multiple grafting and possible cross-linking may occur so that the efficacy of the invention will be adversely affected.

The amount of graft copolymer impact modifier to be added to the polar polymer in order to achieve satisfactory impact resistance may vary widely. The amount of graft copolymer impact modifier used should be that amount which is sufficient to give the polar polymer/impact modifier blend a rubber content of from about 2 % to about 30%, based on the weight of the entire composition. The preferred amount of graft copolymer impact modifier to be used will be dependent on the particular polar polymer with which it is to be blended.

Generally, low levels of the graft copolymer impact modifier are sufficent for polymers such as polyl-(vinylchloride) and polycarbonate. Such low levels may be sufficent to provide from about 5% to about 15% rubber. Much higher levels, such as from about 15% to about 30% rubber are required for polar polymers such as polyacrylates and polyesters. If more than about 30% rubber is used then the resultant blend will have insufficient stiffness for some applications.

The rubber content desirable with a particular polar polymer may be determined by compounding, molding and impact evaluation of blends of polar polymer and the graft copolymer of this invention over a range of blend compositions.

Rubber content of a particular blend is determined by any one of a number of techniques well known in the art. For example, rubber content of a particular blend may be determined by solvent fractionation and chemical analysis; infrared or nuclear magnetic resonance spectroscopy; and calibrated mechanical tests.

The graft copolymer impact modifier of this invention may be used with a wide variety of polar polymers and is particularly efficacious when used with polyvinylchloride. Other polar polymers with which it may be used include acrylonitrile-butadiene-styrene polymer, acetal polymers, polyarylates, acrylic-styrene copolymers, acrylonitrile-styrene-acrylic polymers, acrylonitrile-styrene polymers modified with ethylene-propylene rubber, cellulosics, polyester-polyether block copolymers, polyesters such as polybutylene terephthalate and polyethylene terephthalate, and including liquid-crystal polyesters, polyetheramides, polyetheretherketones, polyetherimides, polyethersulfones, ethylene-vinyl alcohol copolymers, polyvinyl chloride, chlorinated polyvinyl chloride, polyvinylidene chloride and fluoride, styrene polymers such as polystyrene, high-impact polystyrene, copoly(styrene-acrylonitrile), styrene-butadiene copolymers, styrene-maleic anhydride copolymers, alkyl-substituted styrenes copolymerized with styrene alone or with the additional monomers listed for styrene, polyphenylene ether, polyphenylene sulfide, polysulfone, polyurethane, polyamides, i.e., nylons such as nylon 6, nylon 6•6, nylon 6•9, nylon 6•10, nylon 6•12, nylon 11, nylon 12, amorphous nylons, polyamideimide, polycaprolactone, polyglutarimide, poly(methyl methacrylate), other $C_1$ to $C_8$ poly(alkyl (meth)acrylates) and polycarbonates such as bis-phenol A polycarbonates. The acrylic polymers referred to above are polymers containing at least 50 weight percent, and preferably at least 80 weight percent, of units of acrylic acid and/or methacrylic acid (referred to collectively as (meth)-acrylic acid) or their esters, preferably their alkyl esters and more preferably their alkyl esters in which the alkyl group contains from one to eight, preferably one to four, carbon atoms. The remaining units may be those from one or more monomers copolymerizable with the (meth)acrylic acid or ester by free-radical polymerization, preferably vinylaromatic monomer, vinyl esters or vinyl nitriles, and more preferably of styrene or acrylonitrile.

The following Examples are given for the sole purpose of illustrating the invention.

In the Examples, notched izod impact strength is determined in accordance with ASTM test D256-88.

DuPont Nordel 2722 used in the examples is a partially crystalline terpolymer of ethylene, propylene, and 1,4-hexadiene. The approximate composition is 55-65% ethylene, 30-40% propylene, and 5-10% hexadiene.

The measured glass transition temperature (by DSC) is -40°C. The broad melting endotherm has a maximum at 55°C.

Isopar E is an inert hydrocarbon solvent mixture of 2-methylalkanes having six to twelve carbon atoms.

In order to more fully illustrate the nature of this invention and the manner of practicing the same, the following examples are presented.

## EXAMPLE 1

An EPDM-acrylic graft copolymer is made by polymerizing a 2% ethyl acrylate (EA) - 98% methyl methacrylate (MMA) monomer mixture in the presence of EPDM (100 parts monomer to 80 parts EPDM). Radicals are generated from di-tertiary-butyl peroxide (DTBPO) at the rate of 0.00010 mole per liter per minute (radical flux). Monomer and initiator are fed to the reaction over a period of 60 minutes and the theoretical (100% conversion) solids content at the end of the reaction is 50%.

A 6.44 1 (1.7 gallon) reactor equipped with a double helical agitator (115 rpm) is charged with 1980 g Isopar E and heated to 160°C. 890 g of EPDM (DuPont Nordel 2722) is fed to the reactor via a melt extruder at a rate of about 10 g per minute. After a 45 minute hold at 160°C, the addition of monomer and initiator solutions is begun. Over a two minute period two solutions are added. The first has reactants in a ratio of 0.70 g of di-t-butyl peroxide in 21 g of Isopar E. The second has reactants in a ratio of 0.07 g of di-t-butyl peroxide in 0.7 g of ethyl acrylate and 36 g of methyl methacrylate. For the next 58 minutes the second feed is continued at the same rate. Total weight of reactants of the second solution is 1.92 g of di-t-butyl peroxide and 21 g of ethyl acrylate in 1050 g of methyl methacrylate. This feed schedule results in a radical flux of 0.00010 during the feed. Alter the feed is complete the reaction is held at 150°C for 15 minutes and is then devolatized by passing through a 30 mm Werner-Pfleiderer extruder, equipped with vacuum vents, at a temperature of 200-250°C. Elemental analysis (74.4% C, 11.5% H, and 14.3% O) reveals a composition of 54.0% EPDM and 46.0% acrylic.

The graft copolymer is fractionated to determine its composition. A 1 gram sample is dissolved in 12 ml tetrahydrofuran by warming slightly and shaking in a centrifuge tube. Once all material is dissolved, the EPDM containing portions are precipitated by adding 12 ml of acetone. The precipitated material is then centrifuged at 17,000 rpm for 2 hours. A plug consisting of all EPDM containing polymer collects on the bottom of the centrifuge tube. The solution contains the ungrafted acrylic polymer.

The solution portion is carefully removed from the centrifuge tube. After evaporation of the solvent the molecular weight of the acrylic polymer was determined by gel permeation chromatography (gpc) to be 46,100 (number average). It is assumed that the molecular weight of this acrylic polymer that had not become attached to the EPDM during the polymerization is the same as that of the acrylic segment that had become attached.

The plug is subjected to this dissolution/precipitation/centrifugation procedure two additional times to remove the last traces of ungrafted acrylic polymer. After thorough drying the plug is analyzed for elemental composition. The carbon content (82.0%) indicates a ratio of grafted acrylic to total EPDM of 0.17 and a percent of acrylic polymer grafted of 25%.

39 grams of the unfractioned graft copolymer is melt blended with 71 grams of a methyl methacrylate polymer (Plexiglas V-811) on a 7.62 cm x 17.8 cm (three inch X seven inch) electric mill set at 218°C. Once the material fluxed it is mixed an additional 3 minutes. While still hot the material is transferred to a preheated mold (0.32 cm X 13 cm X 13 cm) and pressed at 150°C and 15,000 psi for 3 minutes. The mold is allowed to cool in an ambient press at 15,000 psi for 3 minutes. Standard ASTM test parts are cut and milled from the plaque. Impact strength is determined using ASTM test D256-88.

## EXAMPLE 2

An EPDM-acrylic graft copolymer is made by polymerizing a 15% ethyl acrylate (EA) - 85% methyl methacrylate (MMA) monomer mixture in the presence of an equal amount of EPDM. Radicals are generated from di-tertiary-butyl peroxide (DTBPO) at the rate of 0.00017 mole per liter per minute (Radical Flux). Monomer and initiator are fed to the reaction over a period of 180 minutes and the theoretical (100% conversion) solids content at the end of the reaction is 50%.

A 6.44 I (1.7 gallon) reactor equipped with a double helical agitator (115 rpm) is charged with 1875 grams of Isopar E and heated to 150°C. 1000 grams EPDM (DuPont Nordel 2722) is fed to the reactor via a melt extruder at a rate of about 10 grams per minute. After a 45 minute hold at 150°C, the addition of an initiator solution is begun. Over a 5 minute period, 3.5 grams of di-tertiary-butyl peroxide in 75 grams of Isopar E is added. An additional 50 grams of Isopar E is then added to flush the lines into the reactor. Over the next 180 minutes a solution of 10.5 grams of di-tertiary-butyl peroxide, 150 gram of ethyl acrylate, and 850 grams of methyl methacrylate is added. The reaction mixture is then held for 30 minutes at a temperature of 150°C. Over the next 2 hours, the temperature of the reaction mixture is increased to 170°C. The reaction is then held for 30 minutes at 170°C. The reaction mixture is then devolatilized by passing it through a 30 mm Werner-Pfleiderer extruder, equipped with vacuum vents, at a temperature of 200 -250°C. Elemental analysis (74.2% C, 11.0% H, and 14.7% O) reveals a composition of 53.3% EPDM and 46.7% acrylic.

## EXAMPLE 3

An EPDM-acrylic graft copolymer is made by polymerizing a 5% ethyl acrylate (EA) - 95% methyl methacrylate (MMA) monomer mixture in the presence of an equal amount of DuPont Nordel 2722. Radicals are generated from di-tertiary-butyl peroxide (DTBPO) at the rate of 0.00013 mole per liter per minute (Radical Flux). Monomer and initiator are fed over a period of 180 minutes and the theoretical (100% conversion) solids content at the end of the reaction is 45%.

A 6.44 l (1.7 gallon) reactor equipped with a double helical agitator (115 rpm) is charged with 2075 grams of Isopar E and heated to 150°C. 900 grams EPDM (DuPont Nordel 2722) is fed to the reactor via a melt extruder at a rate of about 10 grams per minute. After a 45 minute hold at 150°C, the addition of an initiator solution is begun. Over a 5 minute period, 2.9 grams of di-tertiary-butyl peroxide in 75 grams of Isopar E is added. Over the next 180 minutes a solution of 7.4 grams of di-tertiary-butyl peroxide, 45 grams of ethyl acrylate, and 856 grams of methyl methacrylate is added. Immediately after this addition is complete, a third solution (1.21 grams of di-tertiary-butyl peroxide and 31 grams of Isopar E) is added over a period of 30 minutes. The reaction mixture is then held for 15 minutes at a temperature of 150°C. The reaction mixture is then heated to 155°C over a thirty minute period and the temperature is then raised to 170°C over a 45 minute period. The reaction mixture is devolatilized by passing it through a 30 mm Werner-Pfleiderer extruder, equipped with vacuum vents, at a temperature of 200 - 250°C. Elemental analysis (74.7% C, 11.2% H, and 15.1% O) reveals a composition of 55.5% EPDM and 44.5% acrylic.

## EXAMPLE 4

An EPDM-acrylic graft copolymer is made by polymerizing a 5% ethyl acrylate (EA) - 95% methyl methacrylate (MMA) monomer mixture in the presence of an equal amount of EPDM. Radicals are generated from di-tertiary-butyl peroxide (DTBPO) at the rate of 0.00016 mole per liter per minute (Radical Flux). Monomer and initiator are fed over 120 minutes and the theoretical (100% conversion) solids content at the end of the reaction is 45%.

A 6.44 l (1.7 gallon) reactor equipped with a double helical agitator (115 rpm) is charged with 2075 grams of Isopar E and heated to 160°C. 900 grams EPDM (DuPont Nordel 2722) is fed to the reactor via a melt extruder at a rate of about 10 grams per minute. Alter holding the reaction mixture for 45 minutes at 160°C, the addition of monomer and initiator solutions is begun. Over a 7 minute period, two solutions are added. The first solution has reactants in a ratio of 1.04 grams of di-tertiary-butyl peroxide in 75 grams of Isopar E. The second solution has reactants in a ratio of 0.40 grams of di-t-butyl peroxide in 3.0 grams of ethyl acrylate and 57 grams of methyl methacrylate. For the next 113 minutes, the second feed is continued at the same rate as before. Total weight of reactants of the second solution are 5.65 grams of di-t-butyl peroxide and 43 grams of ethyl acrylate in 808 grams of methyl methacrylate. This feed schedule results in a radical flux of 0.00016 during the feed of the reactants. After the feed is complete, the reaction mixture is heated to 170°C over a period of 60 minutes. The reaction mixture is then devolatilized by passing it through a 30 mm Werner-Pfleiderer extruder, equipped with vacuum vents, at a temperature of 200 - 250°C. Elemental analysis (76.8% C, 11.8% H, and 11.5% O) reveals a composition of 64.3% EPDM and 35.7% acrylic.

## EXAMPLES 1-3, 5-79

Data concerning examples 1-3, previously presented, is repeated here in order to make it part of the same presentation for all of the examples.

Explanation of the headings used for Table 1, set forth below are as follows:

Weight Percent Ethyl Acrylate - This is the weight present of ethyl acrylate in the monomer mix. The remainder of the monomer mix is methyl methacrylate except for example 51 which also contained 5% of methacrylic acid.

Ratio - This is the weight ratio of graft monomer to polymer derived from EPDM used in the reaction.

Reaction Temperature - This is the temperature at which the reaction was conducted, expressed in degrees C.

Flux - This is the flux of radicals generated from di-t-butyl peroxide expressed in units of $10^{-5}$ moles per liter per minute.

Theoretical Solids Content - This is the theoretical solids content of the reaction calculated at 100% monomer conversion.

Time - This is the time for the initial feed/the time for the second feed, both expressed in minutes.

Example Process Used - This sets forth that the particular example is prepared using the procedure of one of examples 1-4.

Weight Percent EPDM - This is the EPDM content of the graft copolymer produced. It is calculated from the elemental analysis.

The procedure of one of examples 1-4 is repeated numerous times. The procedure is varied as is set forth in the following table.

## Table 1

| Example No. | Wt % Ethyl Acrylate | Ratio | Reaction Temperature (°C) | Flux | Theoretical Solids Content | Time | Example Process Used | Wt % EPDM |
|---|---|---|---|---|---|---|---|---|
| 1 | 2 | 1.25 | 160 | 10 | 50 | 2/58 | 1 | 54 |
| 2 | 15 | 1.00 | 150 | 14 | 50 | 0/180 | 2 | 53 |
| 3 | 5 | 1.00 | 150 | 13 | 45 | 0/180 | 3 | 56 |
| 5 | 5 | 1.00 | 150 | 16 | 45 | 0/180 | 3 | 55 |
| 6 | 15 | 1.00 | 155 | 14 | 45 | 0/180 | 3 | 55 |
| 7 | 25 | 1.00 | 150 | 13 | 45 | 0/180 | 3 | 51 |
| 8 | 25 | 1.00 | 150 | 16 | 45 | 0/180 | 3 | 52 |
| 9 | 25 | 1.00 | 160 | 12 | 45 | 0/180 | 3 | 60 |
| 10 | 25 | 1.00 | 160 | 16 | 45 | 0/180 | 3 | 54 |
| 11 | 25 | 1.00 | 160 | 16 | 45 | 3/171 | 4 | 52 |
| 12 | 11 | 1.13 | 165 | 15 | 48 | 2/43 | 1 | 63 |
| 13 | 11 | 1.13 | 165 | 15 | 48 | 2/43 | 1 | 61 |
| 14 | 2 | 1.00 | 160 | 10 | 45 | 2/28 | 1 | 61 |
| 15 | 2 | 1.25 | 170 | 20 | 45 | 2/28 | 1 | 53 |
| 16 | 14 | 1.00 | 160 | 20 | 45 | 2/58 | 1 | 55 |
| 17 | 20 | 1.00 | 160 | 10 | 50 | 2/58 | 1 | 57 |
| 18 | 8 | 1.25 | 170 | 10 | 50 | 2/28 | 1 | 61 |
| 19 | 8 | 1.25 | 160 | 20 | 45 | 2/58 | 1 | 51 |
| 20 | 8 | 1.00 | 160 | 20 | 50 | 2/28 | 1 | 59 |
| 21 | 2 | 1.00 | 150 | 10 | 45 | 2/28 | 1 | 49 |
| 22 | 0 | 1.00 | 160 | 10 | 45 | 2/28 | 1 | 63 |
| 23 | 2 | 1.00 | 145 | 10 | 45 | 2/28 | 1 | 48 |
| 24 | 8 | 1.00 | 150 | 10 | 45 | 2/28 | 1 | 59 |
| 25 | 8 | 1.00 | 150 | 20 | 45 | 2/28 | 1 | 56 |
| 26 | 8 | 1.00 | 150 | 30 | 45 | 2/28 | 1 | 58 |
| 27 | 8 | 1.00 | 150 | 20 | 45 | 2/28 | 1 | 59 |
| 28 | 8 | 1.00 | 150 | 40 | 45 | 2/28 | 1 | 60 |

| | | | | | | | | |
|---|---|---|---|---|---|---|---|---|
| 29 | 8 | 1.00 | 150 | 40 | 45 | 2/28 | 1 | 59 |
| 30 | 8 | 1.00 | 160 | 20 | 45 | 2/28 | 1 | 62 |
| 31 | 8 | 1.00 | 160 | 20 | 50 | 2/28 | 1 | 58 |
| 32 | 8 | 1.00 | 150 | 20 | 50 | 2/28 | 1 | 50 |
| 33 | 2 | 1.00 | 150 | 20 | 50 | 2/28 | 1 | 53 |
| 34 | 2 | 1.00 | 150 | 10 | 50 | 2/28 | 1 | 54 |
| 35 | 2 | 1.00 | 150 | 5 | 50 | 2/28 | 1 | 55 |
| 36 | 2 | 1.00 | 145 | 5 | 50 | 2/28 | 1 | 54 |
| 37 | 25 | 1.00 | 150 | 10 | 50 | 2/28 | 1 | 56 |
| 38 | 2 | 1.00 | 150 | 10 | 52 | 2/28 | 1 | 52 |
| 39 | 2 | 1.00 | 150 | 10 | 50 | 2/58 | 1 | 55 |
| 40 | 2 | 1.00 | 150 | 10 | 55 | 2/28 | 1 | 53 |
| 41 | 2 | 1.00 | 150 | 5 | 50 | 2/58 | 1 | 56 |
| 42 | 2 | 1.00 | 150 | 10 | 57 | 2/28 | 1 | 55 |
| 43 | 2 | 1.00 | 150 | 20 | 50 | 2.58 | 1 | 55 |
| 44 | 2 | 1.00 | 150 | 10 | 60 | 2/28 | 1 | 54 |
| 45 | 8 | 1.00 | 150 | 10 | 55 | 2/28 | 1 | 56 |
| 46 | 2 | 1.00 | 145 | 10 | 55 | 2/28 | 1 | 54 |
| 47 | 8 | 1.00 | 150 | 10 | 55 | 2/58 | 1 | 53 |
| 48 | 8 | 1.00 | 160 | 10 | 55 | 2/28 | 1 | 57 |
| 49 | 0 | 1.00 | 150 | 15 | 55 | 2/58 | 1 | 59 |
| 50 | 2 | 1.00 | 145 | 20 | 55 | 2/28 | 1 | 56 |
| 51 | 2 | 1.00 | 150 | 15 | 55 | 2/28 | 1 | 56 |
| 52 | 2 | 2.00 | 150 | 15 | 60 | 2/43 | 1 | 34 |
| 53 | 0 | 1.00 | 145 | 15 | 55 | 2/58 | 1 | 51 |
| 54 | 2 | 1.00 | 145 | 25 | 55 | 2/28 | 1 | 52 |
| 55 | 2 | 0.62 | 145 | 20 | 50 | 2/28 | 1 | 66 |
| 56 | 2 | 0.62 | 145 | 15 | 50 | 2/58 | 1 | 67 |
| 57 | 2 | 0.33 | 145 | 20 | 45 | 2/28 | 1 | 79 |
| 58 | 2 | 1.00 | 140 | 20 | 50 | 2/58 | 1 | 52 |
| 59 | 2 | 1.00 | 140 | 20 | 50 | 2/58 | 1 | 47 |

| | | | | | | | | |
|---|---|---|---|---|---|---|---|---|
| 60 | 2 | 1.00 | 135 | 20 | 50 | 2/58 | 1 | 51 |
| 61 | 2 | 1.00 | 135 | 15 | 50 | 2/118 | 1 | 54 |
| 62 | 0 | 1.00 | 160 | 10 | 50 | 2/58 | 1 | 53 |
| 63 | 0 | 1.00 | 160 | 10 | 50 | 2/58 | 1 | 62 |
| 64 | 0 | 1.00 | 160 | 15 | 55 | 2/28 | 1 | 56 |
| 65 | 0 | 1.00 | 160 | 10 | 60 | 2/58 | 1 | 59 |
| 66 | 0 | 1.00 | 170 | 15 | 55 | 2/28 | 1 | 65 |
| 67 | 0 | 1.00 | 170 | 7 | 60 | 2/58 | 1 | 54 |
| 68 | 2 | 2.00 | 150 | 15 | 60 | 2/43 | 1 | 37 |
| 69 | 0 | 3.00 | 150 | 14 | 60 | 2/58 | 1 | 28 |
| 70 | 0 | 2.00 | 140 | 18 | 60 | 2/43 | 1 | 36 |
| 71 | 0 | 2.00 | 160 | 13 | 60 | 2/43 | 1 | 40 |
| 72 | 0 | 2.00 | 150 | 15 | 45 | 2/43 | 1 | 33 |
| 73 | 2 | 2.00 | 160 | 13 | 60 | 2/43 | 1 | 37 |
| 74 | 0 | 2.00 | 150 | 15 | 55 | 2/58 | 1 | 36 |
| 75 | 0 | 2.00 | 150 | 12 | 55 | 2/58 | 1 | 37 |
| 76 | 0 | 1.00 | 150 | 10 | 55 | 2/58 | 1 | 37 |
| 77[1] | 0 | 1.25 | 150 | 7 | 55 | 2/118 | 1 | - - |
| 78[2] | 0 | 1.00 | 160 | 10 | 60 | 2/58 | 1 | 43 |
| 79[3] | 0 | 2.00 | 150 | 7-15 | 50-55 | 2/58-118 | | 137-43 |
| 80[4] | 0 | 2.00 | 160 | 5 | 50 | 2/58 | 1 | 43[4] |

[1]   Monomer mixture is 98 weight percent methylmethacrylate and 2 weight percent methacrylic acid

[2]   Monomer mixture is 98 weight percent methylmethacrylate and 2 weight percent 2-acryloxy propionic acid

[3]   This is a composite of sixteen batches prepared over the range of variables indicated. The measured EPDM content range is set forth.

[4]   Instead of EPDM, an ethylene-propylene trunk polymer is used. The EP used is Exxon Vistalon 719.

EVALUATION OF EXAMPLES 1-3, 5-74

In the table which follows, number average molecular weight is determined as is set forth in Example 1. The impact strength is determined by molding plaques as set forth in Example 1 and by then determining the impact strength.

The degree of grafting is also determined as is set forth in Example 1.

The results are as follows:

## Table 2

| Example No. | Number Average Molecular Weight of Graft Portion | Notched Izod (Ft.lb./in.) | Degree of Grafting |
|---|---|---|---|
| * Control | - - - - - | 0.34 | 0 |
| 1 | 46100 | 1.08 | - - - |
| 2 | 2550 | 0.40 | - - - |
| 3 | 9810 | 0.65 | - - - |
| 5 | 8710 | 0.45 | - - - |
| 6 | 2010 | 0.38 | - - - |
| 7 | 1780 | 0.47 | - - - |
| 8 | 1690 | 0.43 | - - - |
| 9 | 2400 | 0.35 | - - - |
| 10 | 1680 | 0.38 | - - - |
| 11 | 1000 | 0.20 | - - - |
| 12 | 15300 | 0.69 | 0.32 |
| 13 | 16700 | 0.78 | 0.36 |
| 14 | 72100 | 0.29 | 0.19 |
| 15 | 31200 | 0.79 | 0.36 |
| 16 | 14100 | 0.49 | - - - |
| 17 | 19300 | 0.66 | - - - |

| | | | |
|---|---|---|---|
| 18 | 32800 | 0.29 | 0.17 |
| 19 | 16500 | 0.95 | - - - |
| 20 | 24900 | 0.54 | 0.41 |
| 21 | 40700 | 0.80 | 0.20 |
| 22 | 58700 | 0.73 | 0.08 |
| 23 | 48400 | 0.67 | 0.14 |
| 24 | 31200 | 0.51 | 0.09 |
| 25 | 15800 | 0.88 | 0.48 |
| 26 | 15400 | 1.68 | 0.62 |
| 27 | 23800 | 0.49 | 0.26 |
| 28 | 12600 | 0.81 | 0.39 |
| 29 | 14200 | 0.55 | 0.40 |
| 30 | 15000 | 0.69 | 0.33 |
| 31 | 17300 | 1.03 | 0.26 |
| 32 | 23300 | 1.04 | 0.30 |
| 33 | 20000 | 1.29 | 0.30 |
| 34 | 37700 | 0.93 | 0.20 |
| 35 | 94700 | 0.44 | 0.10 |
| 36 | 128000 | 0.52 | 0.08 |
| 37 | 23000 | 0.53 | 0.22 |
| 38 | 41400 | 0.72 | 0.16 |
| 39 | 36900 | 0.85 | 0.18 |
| 40 | 43700 | 0.37 | 0.16 |
| 41 | 44400 | 0.46 | 0.16 |
| 42 | 44000 | 0.78 | 0.17 |
| 43 | 15100 | 0.93 | 0.36 |
| 44 | 43000 | 0.88 | 0.20 |
| 45 | 40500 | 0.53 | 0.24 |
| 46 | 48800 | 0.57 | 0.20 |
| 47 | 28800 | 0.71 | 0.22 |
| 48 | 35300 | 0.63 | 0.22 |
| 49 | 31800 | 1.20 | 0.35 |
| 50 | 31900 | 1.41 | 0.34 |
| 51 | 31700 | 0.66 | 0.16 |
| 52 | 33500 | 2.53 | 0.19 |
| 53 | 23100 | 1.09 | 0.22 |
| 54 | 19000 | 1.53 | 0.31 |
| 55 | 14100 | 0.66 | 0.35 |
| 56 | 13700 | 0.73 | 0.44 |
| 57 | 6580 | 0.57 | 0.64 |
| 58 | 15900 | 1.73 | 0.29 |
| 59 | 22300 | 0.90 | 0.15 |
| 60 | 23300 | 0.90 | 0.19 |
| 61 | 18100 | 0.59 | 0.26 |
| 62 | 27100 | 0.86 | 0.25 |

| 63 | 26800 | 0.40 | 0.22 |
| 64 | 28000 | 1.14 | 0.24 |
| 65 | 27000 | 1.27 | 0.27 |
| 66 | 17400 | 0.81 | 0.38 |
| 67 | 23400 | 0.97 | 0.22 |
| 68 | 29400 | 2.78 | 0.33 |
| 69 | 28700 | 0.89 | 0.21 |
| 70 | 40600 | 2.72 | 0.17 |
| 71 | 23800 | 3.12 | 0.28 |
| 72 | 29300 | 2.53 | 0.18 |
| 73 | 46900 | 1.97 | 0.16 |
| 74 | 28700 | 2.97 | 0.18 |

* Control is composed of a blend of 80 weight percent of Plexiglas V-811 and 20 weight percent of EPDM.


EVALUATION OF EXAMPLE 75


In the table which follows, number average molecular weight is determined as is set forth in Example 1. The impact strength is determined by molding plaques as set forth in Example 1 and by then determining the impact strength. The molding procedure used varied in that the polyacrylate (Plexiglas V811) (poly-(methyl methacrylate)) is milled at 204°C until it fluxed. Thereafter the graft copolymer, if any, is added and the mixture is milled for an additional 3 minutes. Molding takes place for 3 minutes at 190°C and under 103 x $10^6$ N/m² (15,000 psi.) Thereafter the molded plaque is cooled for 3 minutes under the same pressure of 103 x 106 N/m² (15,000 psi). The degree of grafting is also determined as is set forth in Example 1. The degree of grafting for Example 75 is 0.28. The number average molecular weight of the graft copolymer of Example 75 is 45,400. The results are as follows:

Table 3

| Weight % Plexiglas V811 | Weight % Graft Co-Polymer Present In Blend | Total Weight % EPDM in Graft Copolymer | Total Weight % of Acrylate in Graft Copolymer | Weight % Neat EPDM Added | Overall Weight % EPDM in Blend | Notched Izod Impact (1/8th") Plaque Ft.lb./in. 23° C |
|---|---|---|---|---|---|---|
| 100.0 | 0.0 | 0.0 | 0.0 | 0.0 | 0.0 | 0.23 |
| 80.0 | 0.0 | 0.0 | 0.0 | 20.0 | 20.0 | 0.19 |
| 61.0 | 29.0 | 10.8 | 18.2 | 10.0 | 20.8 | 1.33 |
| 51.7 | 43.3 | 16.2 | 27.1 | 5.0 | 21.2 | 2.41 |
| 46.0 | 52.0 | 19.4 | 32.6 | 2.0 | 21.4 | 3.23 |
| 42.3 | 57.7 | 21.5 | 36.2 | 0.0 | 21.5 | 3.11 |

EVALUATION OF EXAMPLES 75 and 80 AS IMPACT MODIFIERS FOR COPOLY(STYRENE-ACRYLONITRILE)

The procedure of Example 1 is repeated except that copoly(styrene-acrylonitrile) is milled at 204°C until it fluxes and the graft copolymer is then added and milling continues for 3 additional minutes. The material is then molded, as in Example 1, for 3 minutes at 190°C and under a pressure of 103 x 10⁶ N/m² (15,000 psi). The molded plaque is then cooled for 3 minutes under the same pressure of 15,000 psi. The copoly(styrene-acrylonitrile) used is Dow Tyril 1000 which contains 25 percent by weight of acrylonitrile. The number average molecular weight of Example 80 is not determined but is believed to be within the range of about 9,800 to about 100,000. The degree of grafting is also not determined for Example 80 but is also believed to be within the range of 0.05 to about 0.50. The results are as follows:

Table 4

| Example No. | Weight % Copoly (Styrene-Acrylonitrile) | Weight % Graft Copolymer | Total Weight % EPDM | Total Weight % EP | Total Weight % Acrylate in Graft Copolymer | Notched Izod Impact 1/8th" Plaque Ft/lb./in. (23°C) |
|---|---|---|---|---|---|---|
| Control | 100.0 | 0.0 | 0.0 | 0.0 | 0.0 | 0.29 |
| 80 | 50.4 | 49.6 | 0.0 | 18.5 | 31.1 | 4.36 |
| 75 | 42.3 | 57.7 | 21.5 | 0.0 | 36.2 | 5.46 |

EP 0 420 615 A2

In addition, the graft copolymer of Example 80 is blended with poly(methyl methacrylate) in the manner of Example 1 and the impact strength is determined as set forth in Example 1. The Notched Izod Impact of a 1/8" plaque at 230°C. of the ethylen-proylene graft copolymer of Example 80 is 1.20 Ft.lb./in.

### EVALUATION OF EXAMPLE 76 AS IMPACT MODIFIER FOR POLYCARBONATE

The polycarbonate used is Mobay Merlon M-39 which is a bisphenol A polycarbonate.

The number average molecular weight of Example 76 is 54,000 and the degree of grafting is 0.23. 0.64 cm (quarter inch) plaques are molded in the manner of Example 1. The polycarbonate is milled at 250°C until it fluxes. Thereafter, the graft copolymer is added and the mixture is again milled for 3 minutes at 250°C. The quarter inch polycarbonate plaques are molded, in the manner of Example 1, at 250°C and are then cooled for 3 minutes in the mold.

As will be seen from Table 5, set forth below, the polycarbonate plaques showed surprisingly good impact strength when blended with the graft copolymer
in the amounts indicated in the Table.

Table 5 is set forth below:

Table 5

| Weight % Polycarbonate | Weight % Graft Copolymer | Weight % EPDM | Total Weight% Acrylate Present | Notched Izod Impact (1/4"Plaque)Ft.lb./in | | |
|---|---|---|---|---|---|---|
| | | | | 23°C | 0°C | -18°C |
| 100.0 | 0.0 | 0.0 | 0.0 | 2.09 | 1.92 | 1.86 |
| 82.3 | 17.7 | 7.5 | 10.2 | 10.75 | 8.97 | 6.20 |
| 73.4 | 26.6 | 11.3 | 15.3 | 10.56 | 9.50 | 7.80 |
| 64.5 | 35.5 | 15.11 | 20.4 | 9.29 | 9.76 | 9.22 |

### EVALUATION OF EXAMPLES 76,77 AND 78 AS IMPACT MODIFIERS FOR POLY(BUTYLENE TEREPHTHALATE)

The number average molecular weight of Example 76 is 54,000 and the degree of grafting is 0.23; for Example 77, the number average molecular weight and degree of grafting is not determined but the molecular weight is believed to be within the range of 9,800 to about 100,000 and the degree of grafting is believed to be within the range of 0.05 to about 0.50. For Example 78, the number average molecular weight and degree of grafting is not determined but is believed to be within the ranges set forth for Example 77. Plaques are prepared by milling in the manner of Example 1 at 250°C, until fluxing occurs. The graft copolymer is then added and milling is continued for an additional 3 minutes at 250°C. Plaques are made in the manner of Example 1 by compression molding for 2 minutes at 250°C. Thereafter, the plaques are water cooled for 3 minutes. The notched Izod impact strength is then determined in the manner of Example 1.

The poly(butylene terephthalate) used is General Electric's product Valox 315.

The results are as follows:

Table 6

| Example No. | Weight % Poly(Butylene terephthalate | Weight % Graft Copolymer | Notched IzodImpact Strength 1/8th" Plaque at 23°C (Ft.lb/in.) |
|---|---|---|---|
| Control | 100 | 0 | 0.68 |
| 76 | 80 | 20 | 1.14 |
| 77 | 80 | 20 | 1.29 |
| 78 | 80 | 20 | 1.19 |

EVALUATION OF EXAMPLE 76 AS IMPACT MODIFIER FOR POLYCARBONATE/POLYBUTYLENE TEREPHTHALATE MIXTURE

The polycarbonate used is Mobay's Merlon M-40 which is a bis-phenol A polycarbonate. The poly-(butylene terephthaiate) used is General Electric's product Valox 315. The mixture used is an equal weight amount of polycarbonate and poly(butylene terephthalate). 0.32 cm (one-eighth inch) plaques are prepared by milling the polycarbonate and poly(butylene terephthalate) at 260°C until fluxing occurs. The graft copolymer is then added and milling continues for an additional 3 minutes at 260°C. Molding is accomplished in the manner of Example 1 by molding for 2 minutes at 260°C followed by water cooling for an additional 3 minutes.

The results are set forth in Table 7.

Table 7

| Weight % Poly Carbonate/Poly(butylene Terephthalate) (50/50) | Weight % Graft Copolymer of Example 76 | Notched Izod - 23°C (Ft.lb./in.) |
|---|---|---|
| 100 | 0 | 1.3 |
| 90 | 10 | 14.6 |
| 80 | 20 | 7.3 |
| 70 | 30 | 6.7 |

EVALUATION OF EXAMPLE 79 AS POLY(VINYL CHLORIDE) IMPACT MODIFIER

The poly(vinyl chloride) used is a typical twin screw siding formulation. It is composed of the following components:

| Component | Parts by Weight |
|---|---|
| Geon 103 EPF 76 (PVC K = 67)[1] | 100 |
| AdvastabTM 181 (Tin Stabilizer)[2] | 1.6 |
| Processing Aids | 1.5 |
| Calcium Stearate | 1.3 |
| XL 165[3] | 1.0 |
| $TiO_2$ | 10.0 |

[1] Poly(vinyl chloride) obtained from B. F. Goodrich Company.
[2] Methyl tin mercaptide obtained from Morton Thiokol Company.
[3] A paraffin wax lubricant having a melting point of 74° C. and obtained from American Hoechst Corp.

The poly(vinyl chloride) formulation and the graft copolymer are milled together for approximately 5 minutes at 190°C. 0.32 cm (one-eighth inch) plaques are molded in the manner of Example 1 by molding for 2 minutes at 190°C followed by water cooling for about 3 minutes.

The graft copolymer used is, as indicated earlier, a composite of 16 batches which are prepared over the ranges of variables which were indicated. The number average molecular weight is within the range of 30,000 to about 60,000 and the degree of grafting is within the range of 0.2 to 0.3. The procedure was also varied by, in some cases, adding a neat EPDM (Vistalon 1721, which is a low molecular weight EPDM obtained from Exxon Chemical Company). Observations are also included concerning the glossiness of the plaques.

The results are as follows:

Table 8

| Wt % Poly (Vinyl Chloride) Formulation | | Wt % Graft Copolymer | Total Wt % EPDM in Graft Copolymer | Total Wt % Acrylate in Graft Copolymer | Wt % Neat EPDM Added to Blend | Total Wt % EPDM | Notched Izod Impact (23°C) Observed (ft/lb./in.)Gloss |
|---|---|---|---|---|---|---|---|
| 90.9 | 0.0 | 0.0 | 0.0 | 9.1 | 9.1 | 0.59 | Poor |
| 83.3 | 0.0 | 0.0 | 0.0 | 16.7 | 16.7 | 0.33 | Very Poor |
| 90.9 | 9.1 | 3.6 | 5.5 | 0.0 | 3.6 | 0.55 | Good |
| 83.3 | 16.7 | 6.7 | 10.0 | 0.0 | 6.7 | 10.9 | Very Good |
| 76.9 | 23.1 | 9.2 | 13.9 | 0.0 | 9.2 | 17.0 | Very Good |
| 62.6 | 37.5 | 14.9 | 22.6 | 0.0 | 14.9 | 11.1 | Very Good |
| 86.9 | 8.7 | 3.5 | 5.2 | 4.3 | 7.8 | 1.87 | Fair |
| 83.3 | 8.3 | 3.3 | 5.0 | 8.3 | 11.6 | 2.24 | Fair to Poor |
| 76.9 | 7.6 | 3.0 | 4.6 | 15.4 | 18.4 | 0.89 | Fair to Poor |
| 71.4 | 14.3 | 5.7 | 8.6 | 14.3 | 20.0 | 1.53 | Fair to Poor |

While this invention has been described in terms of preferred embodiments and illustrated by means of specific examples, the invention is not to be construed as limited except as set forth in the following claims.

## Claims

1. A polymer composition comprising, by weight of the two specified components, from 35% to 95% of polar polymer and from 65% to 5% of impact modifier for said polymer, said impact modifier comprising graft copolymer having trunk and graft portions, said trunk comprising units of (1) ethylene, propylene and nonconjugated diene or (2) ethylene and propylene, and said graft portion comprising at least one methacrylate chain grafted with a covalent bond to said trunk and having a weight ratio with said trunk of from 1:9 to 4:1, said chain comprising at least 70 percent by weight of units of methacrylic ester of the formula $CH_2 = C(CH_3)COOR$, where R is alkyl, aryl, substituted alkyl, substituted aryl, or substituted alkaryl and less optionally up to 30 percent of units of acrylic and/or styrenic monomer, said graft portion having a number average molecular weight of from 9,800 to 100,000, preferably from 15,000 to 70,000.

2. A composition as claimed in Claim 1 wherein the degree of grafting is from 0.05 to 0.50, preferably from 0.10 to 0.30.

3. A composition according to Claim 1 or 2 wherein the weight percent of ethylene units to propylene units to diene units is from 35 to 70 of ethylene derived units; from 65 to 30 of propylene derived units; and from 0 to 15 of diene derived units, all based on the weight of the EPDM.

4. A composition according to any preceding Claim wherein said nonconjugated diene comprises 1,4-hexadiene, ethylidenenorbornene, dicyclopentadiene and/or 1,5-cyclooctadiene.

5. A composition according to any preceding Claim wherein said polar polymer comprises poly(methyl methacrylate) copoly(styrene-acrylonitrile) a polycarbonate, poly(vinylchloride), poly(butylene terephthaiate) and/or a poly(glutarimide).

6. A process for enhancing the impact resistance of a polar polymer comprising adding to from 35 to 95 parts by weight of said polar polymer, impact modifier for said polar polymer in an amount of from 65 to 5 parts by weight, said impact modifier comprising graft copolymer having trunk and graft portions, said trunk comprising units of (1) ethylene, propylene and non-conjugated diene or (2) ethylene and propylene, and said graft portion comprising at least one methacrylate chain grafted with a covalent bond to said trunk and having a weight ratio with said trunk of from 1:9 to 4:1, said chain comprising at least 70 percent by weight of units of methacrylic ester of the formula $CH_2 = C(CH_3)COOR$ where R is alkyl, aryl, substituted alkyl, substituted aryl, or substituted alkaryl, and optionally up to 30 percent by weight of units of acrylic and/or styrenic monomer, said graft portion having a number average molecular weight of from about 9,800 to about 100,000, and blending said impact modifier with said polar polymer.

7. A process as claimed in Claim 6 as applied to the production of a composition as claimed in any of Claims 2 to 5.

8. The use of a composition as claimed in any of Claims 1 to 5 in the production of shaped impact resistant polymer articles.

Claims for the following Contracting State: ES

1. A process for enhancing the impact resistance of a polar polymer comprising adding to from 35 to 95 parts by weight of said polar polymer, impact modifier for said polar polymer in an amount of from 65 to 5 parts by weight, said impact modifier comprising graft copolymer having trunk and graft portions, said trunk comprising units of (1) ethylene, propylene and non-conjugated diene or (2) ethylene and propylene, and said graft portion comprising at least one methacrylate chain grafted with a covalent bond to said trunk and having a weight ratio with said trunk of from 1:9 to 4:1, said chain comprising at least 70 percent by weight of units of methacrylic ester of the formula $CH_2 = C(CH_3)COOR$ where R is alkyl, aryl, substituted alkyl, substituted aryl, or substituted alkaryl, and optionally up to 30 percent by weight of units of acrylic and/or styrenic monomer, said graft portion having a number average molecular weight of from about 9,800 to about 100,000, and blending said impact modifier with said polar polymer.

2. A process according to Claim 1 wherein the degree of grafting is from 0.05 to 0.50, preferably from 0.10 to 0.30.

3. A process according to Claim 1 or 2 wherein the weight percent of ethylene units to propylene units to diene units is from 35 to 70 of ethylene derived units; from 65 to 30 of propylene derived units; and from 0 to 15 of diene derived units, all based on the weight of the EPDM.

4. A process according to any preceding Claim wherein said non-conjugated diene comprises 1,4-hexadiene, ethylidenenorbornene, dicyclopentadiene and/or 1,5-cyclooctadiene.

5. A process according to any preceding Claim wherein said polar polymer comprises poly(methyl methacrylate) copoly(styrene-acrylonitrile) a polycarbonate, poly(vinylchloride), poly(butylene terephthalate) and/or a poly(glutarimide).

6. The use of a composition made by a process as claimed in any of Claims 1 to 5 in the production of shaped impact resistant polymer articles.